# EUROPÄISCHE PATENTANMELDUNG

(11) **EP 1 898 021 A2**
(43) Veröffentlichungstag der Anmeldung: **12.03.2008**
(21) Anmeldenummer: 07004643.8
(22) Anmeldetag: 07.03.2007
(51) Int. Cl.: E04F 10/06, E06B 9/76, E06B 9/88

(54) **Antriebsvorrichtung für Markisen und dergleichen**

(30) Priorität: 07.09.2006 DE 102006042520
(71) Anmelder: Gerhard Geiger GmbH & Co., 74321 Bietigheim-Bissingen (DE)
(72) Erfinder: Dangel, Hans-Michael, 74391 Erligheim (DE)
(74) Vertreter: Jeck, Anton

(57) **Zusammenfassung**

Die Erfindung betrifft eine Antriebsvorrichtung bestehend aus einer Antriebseinheit und einer Abtriebseinheit für Markisen und dergleichen. Die Antriebsvorrichtung ist im Zuge des Markisenantriebs angeordnet, insbesondere die Kurbelantriebsvorrichtung. Die Abtriebseinheit weist eine integrierte Überlastsicherung auf.

## Beschreibung

Die Erfindung betrifft eine Antriebsvorrichtung nach dem Oberbegriff des Anspruchs 1.

Bei derartigen Antriebsvorrichtungen kann es vorkommen, dass ein eventuell vorhandener Endanschlag überdreht wird und die Antriebsvorrichtung und/oder dieser nachfolgende Komponenten, wie Lager, Verzahnungen usw., beschädigt werden.

Die Aufgabe der Erfindung besteht darin, bei einer Antriebsvorrichtung der im Oberbegriff des Anspruchs 1 genannten Art die genannten Beschädigungen zu vermeiden.

Diese Aufgabe wird mit den Merkmalen des Anspruchs 1 gelöst.

Damit können Drehmomentspitzen abgefangen werden. Ein Überdrehen eines eventuell vorhandenen Endanschlags wird unmöglich. Die der Antriebsvorrichtung nachfolgenden Komponenten werden geschützt.

Gemäß einer weiteren Ausbildung der Erfindung arbeitet die Überlastsicherung in eine oder zwei Richtungen drehmomentabhängig Links- und Rechtsvarianten sind möglich. Daher kann die Antriebsvorrichtung bzw. können die einzelnen Baugruppen universell eingesetzt werden. Ebenso kann die Antriebsvorrichtung als Freilauf und oder als Überlastsicherung eingesetzt werden.

Gemäß einer weiteren Ausbildung der Erfindung ist eine Sperrrichtung zwischen Antriebseinheit und Abtriebseinheit in einer der Betriebsrichtung entgegen gesetzten Richtung für die Übertragung von benötigten Bedienkräften vorgesehen. Dadurch wird die Verwendungsmöglichkeit der Antriebsvorrichtung vergrößert.

Gemäß einer weiteren, vorteilhaften Ausbildung der Erfindung ist die Abtriebseinheit form- und/oder kraftschlüssig in der Antriebseinheit befestigt.

Gemäß einer weiteren, vorteilhaften Ausbildung der Erfindung erfolgt die Befestigung der Abtriebseinheit in der Antriebseinheit mit losen Befestigungsmitteln oder durch eine Verformung beliebiger Art.

Gemäß einer weiteren, vorteilhaften Ausbildung der Erfindung ist eine axiale Sicherung der Abtriebseinheit in der Antriebseinheit durch Verwendung von Befestigungsmitteln, insbesondere einer Umspritzung, gewährleistet.

Eine weitere, vorteilhafte Ausbildung der Erfindung sieht vor, dass die Abtriebseinheit einen in der Antriebseinheit befestigten Zahnring aufweist, der mit einer Innenverzahnung versehen ist, und dass eine Abtriebsachse in diesem Zahnring drehbar gelagert ist, die mit mindestens einem an ihr befestigten Eingriffsglied in die Innenverzahnung eingreift.

Gemäß einer weiteren, vorteilhaften Ausbildung der Erfindung sind die Eingriffsglieder durch mindestens ein oder mehrere sich vorzugsweise gegenüberliegende, radial wirkende Sperrbolzen gebildet, die durch ein zwischen diesen angeordnetes Druckmittel gegen die Innenverzahnung gedrückt werden.

Gemäß einer weiteren, vorteilhaften Ausbildung der Erfindung sind die Eingriffsglieder durch ein oder mehrere getrennte, vorzugsweise gegenüberliegende, Sperrkörper mit Federarmen gebildet, die an der Innenverzahnung anliegen und deren Enden in die Innenverzahnung eingreifen.

Gemäß einer weiteren, vorteilhaften Ausbildung der Erfindung sind die Eingriffsglieder durch einen zentral auf einen Abschnitt der Abtriebsachse aufgeschobenen Sperrkörper mit ein oder mehreren, vorzugsweise gegenüberliegenden Federarmen gebildet, die an der Innenverzahnung anliegen und deren Enden in die Innenverzahnung eingreifen.

Gemäß einer weiteren, vorteilhaften Ausbildung der Erfindung können die Eingriffsglieder bzw. der Zahnring so ausgestaltet sein, dass die Überlastsicherung durch eine reibschlüssige Geometrie oder einer Mischung aus Reib- und Formschlüssigkeit realisiert wird.

Diese Ausbildungen der Erfindung ermöglichen einen geringen Platzbedarf und eine variabel definierbare Freilaufrichtung bzw. Überlastsicherungsrichtung. Die Antriebsvorrichtungen sind kostengünstig herstellbar und einfach nachrüstbar.

Die Erfindung wird nun anhand von Ausführungsbeispielen näher erläutert. Es zeigen:
- Fig. 1a: eine Seitenansicht einer Antriebsvorrichtung mit integrierter Überlastsicherung ausgebildet und aus einer Antriebseinheit und einer Abtriebseinheit bestehend, gemäß der Erfindung,
- Fig. 1b: eine um einen Winkel von 90° gedrehte Ansicht der Fig. 1a,
- Fig. 2a: eine Seitenansicht der Abtriebseinheit der Antriebsvorrichtung der Figuren 1a, 1b,
- Fig. 2b: ein um einen Winkel von 90° gedrehter Schnitt durch die Abtriebseinheit der Fig. 2a,
- Fig. 2c: eine perspektivische Ansicht der Abtriebseinheit der Fig. 2a,
- Fig. 3a: einen teilweisen Längsschnitt und eine teilweise Seitenansicht der Abtriebsvorrichtung der Fig. 1a,
- Fig. 3b: einen teilweisen Längsschnitt und eine teilweise Seitenansicht der Abtriebsvorrichtung der Fig. 1b,
- Fig. 4: einen Horizontalschnitt durch die Antriebsvorrichtung gemäß der Linie IV-IV in Fig. 1,
- Fig. 5a: eine Draufsicht auf einen in der Abtriebseinheit verwendeten Zahnring,
- Fig. 5b: eine Seitenansicht des Zahnrings der Fig. 5a,
- Fig. 5c: eine perspektivische Ansicht des Zahnrings der Fig. 5a,
- Fig. 6a: einen teilweisen Längsschnitt und eine teilweise Seitenansicht einer zweiten Ausführung einer Antriebsvorrichtung mit integrierter Überlastsicherung ausgebildeten und aus einer Antriebseinheit und einer Abtriebseinheit bestehend, gemäß der Erfindung,
- Fig. 6b: eine um einen Winkel von 90° gedrehte Ansicht der Fig. 6a,
- Fig. 7a: eine Seitenansicht einer dritten Ausführung einer Antriebsvorrichtung mit integrierter Überlastsicherung ausgebildeten und aus einer Antriebseinheit und einer Abtriebseinheit bestehend, gemäß der Erfindung,
- Fig. 7b: einen Längsschnitt durch die Antriebsvorrichtung der Fig. 7a gemäß der Linie VIII-VIII in Fig.7c
- Fig. 7c: einen Horizontalschnitt durch die Antriebsvorrichtung gemäß der Linie VII-VII in Fig. 7a,

- Fig. 8a: eine Seitenansicht der Abtriebseinheit der Antriebsvorrichtung der Fig. 7a,
- Fig. 8b: einen Längsschnitt durch die Abtriebseinheit der Fig. 8a,
- Fig. 8c: einen Horizontalschnitt durch die Abtriebseinheit gemäß der Linie IX-IX in Fig. 8a,
- Fig. 8d: eine perspektivische Ansicht der Abtriebseinheit der Fig. 8a,
- Fig. 9a: eine Seitenansicht einer vierten Ausführung einer Abtriebseinheit,
- Fig. 9b: einen um einen Winkel von 90° gedrehten Längsschnitt durch die Abtriebseinheit der Fig. 9a,
- Fig. 9c: einen Horizontalschnitt durch die Abtriebseinheit gemäß der Linie XI-XI in Fig. 9a und
- Fig. 9d: eine Ansicht der Abtriebseinheit der Fig. 9a von unten.

In den Figuren sind verschieden ausgebildete Antriebsvorrichtungen dargestellt, die beispielsweise bei einem Kurbelantrieb für Markisen angewendet werden können. Auf die Wirkungsweise eines mit dem Markisenantrieb verbundenen Markisengetriebes wird hier nicht näher eingegangen, da diese hinlänglich bekannt ist. Hier wird vielmehr die Bauart und besondere Wirkungsweise der Antriebsvorrichtung mit integrierter Überlastsicherung und deren Funktionsweise erläutert. Die Antriebsvorrichtung besteht dabei grundsätzlich aus einer Antriebseinheit und einer in dieser befestigten Abtriebseinheit mit einer Abtriebsachse, die drehbar mit der Antriebseinheit gekuppelt werden kann. Die Abtriebseinheit kann dabei in der Antriebseinheit auf verschiedene Arten positioniert bzw. befestigt werden.

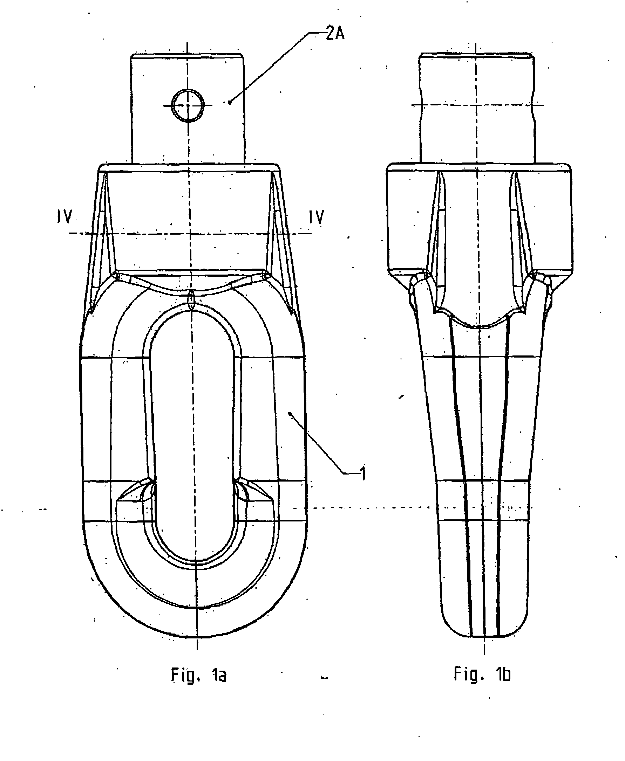

In den Figuren ist eine erste Ausführung einer solchen Antriebsvorrichtung gezeigt. Beispielsweise liegt in den Figuren 1, 1b eine Antriebseinheit 1 in Form eines lang gestreckten Rings vor, der am Kopfende mit einer Aufnahme für eine Abtriebseinheit 2A versehen ist. Die Achse der Abtriebseinheit 2A ist gegenüber der Antriebseinheit 1 in einer vorbestimmten Richtung drehbar gelagert.

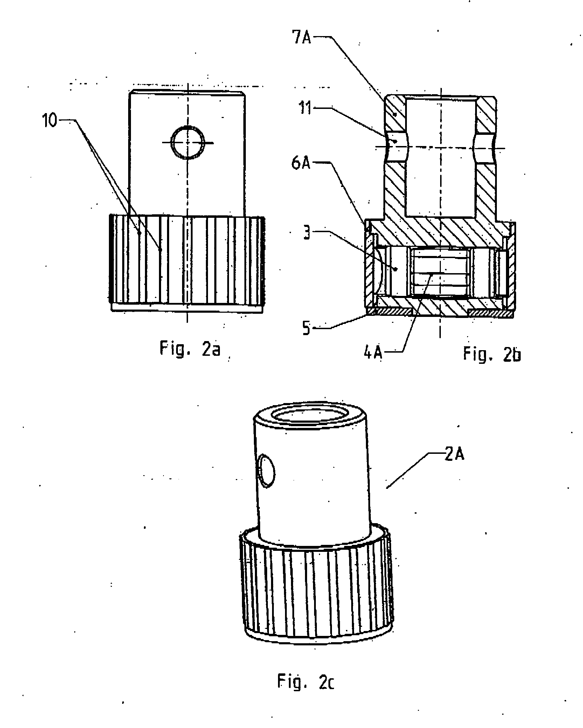

Aus den Figuren 2a-2c geht eine erste Ausführung der bei der Antriebsvorrichtung der Figuren 1a, 1b verwendeten Abtriebseinheit 2A hervor. Die Abtriebseinheit 2A umfasst einen Zahnring 6A mit einer Innenverzahnung und eine am unteren Rand des Zahnrings 6A befestigte Lochscheibe 5 mit einer zentralen Bohrung auf. Auf der Außenseite des Zahnrings 6A sind Längsrippen 10 angeordnet. Die Abtriebseinheit 2A wird in der Antriebseinheit 1 befestigt, vorzugsweise mit dem Kunststoffmaterial dieser Antriebseinheit umspritzt. Die Längsrippen 10 sorgen dabei für eine entsprechende Verdrehsicherung des Zahnrings 6A. Im Zahnring 6A und in der Lochscheibe 5 ist eine im Schnitt H-förmige Aufnahme 7A mit einer Querbohrung gelagert. Dazu ist der Zahnring 6A oben mit einem Absatz versehen, in den ein Bund der Aufnahme 7A eingreift, und die Aufnahme 7 ist am unteren Ende mit einem Lagerzapfen versehen, der in die Zentralbohrung der Lochscheibe 5 eingreift. Die Aufnahme 7A hat am oberen Ende eine Hohlachse , die eine durchgehende Querbohrung 11 zur Aufnahme eines Stifts aufweist, der eine nicht dargestellte, in die Hohlachse eingeführte Stange des Markisengetriebes hält.

In der Querbohrung der Aufnahme 7A ist die Überlastsicherung aufgenommen, die hier aus zwei gegenüberliegenden, in die Verzahnung eingreifenden Sperrbolzen 3 und einem zwischen diesen angeordneten Federelement 4A besteht. Dieses Federelement drückt die Sperrbolzen 3 mit einer bestimmten Kraft gegen die Innenverzahnung des Zahnrings 6A. Wird diese Kraft im Betrieb der Antriebsvorrichtung überschritten, rastet der Zahnring 6A um eine Zahnteilung weiter. Durch diese Drehmomentbegrenzung wird die Überlastsicherung verwirklicht.

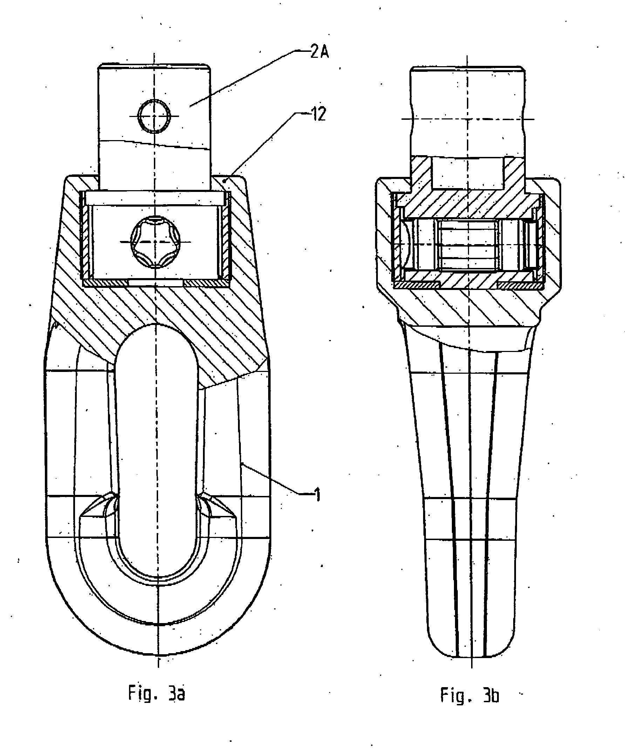

Aus den Figuren 3a, 3b ist zu erkennen, wie die Abtriebseinheit 2A in die Antriebseinheit 1 eingesetzt ist. Dabei umgreift die Antriebseinheit 1 den Bund der Abtriebseinheit 2A mittels eines Ringrands 12, so dass die Abtriebseinheit 2A in der Antriebseinheit 1 axial gesichert ist.

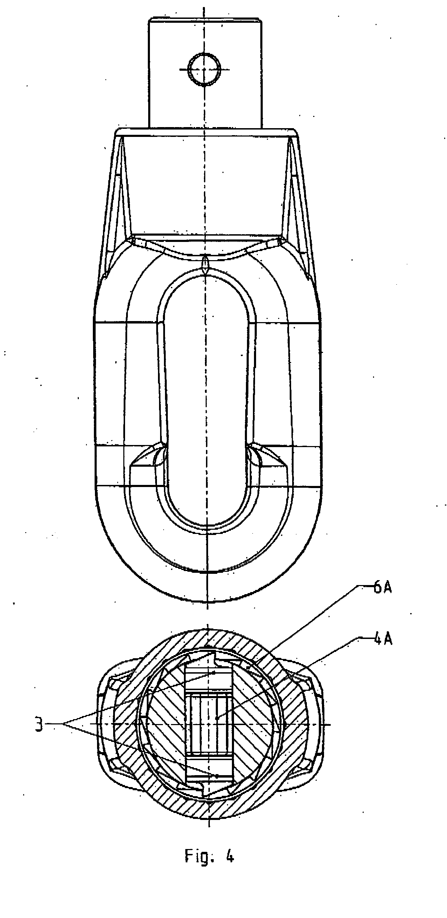

Fig. 4 zeigt noch einmal genauer den Eingriff der Sperrbolzen 3 in die Innenverzahnung des Zahnrings 6A.

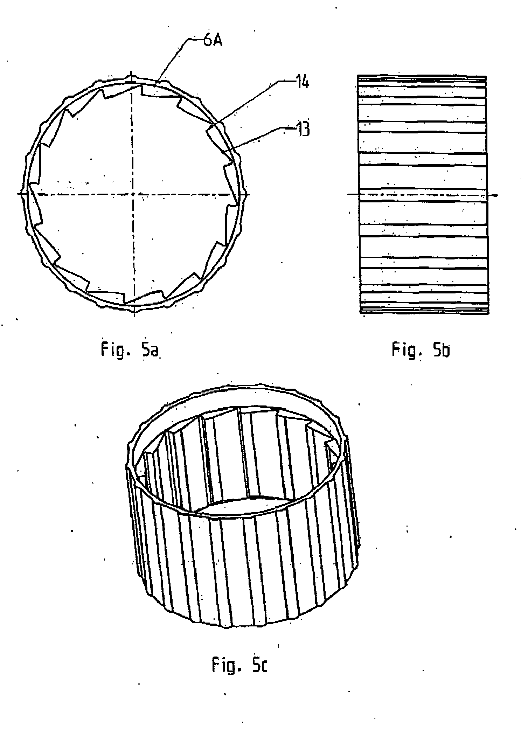

Die Figuren 5a-5c zeigen den Zahnring 6A noch einmal für sich. Es ist zu erkennen, dass jeder Zahn eine lange Zahnflanke 13, an die Stirnflanke der Sperrbolzen 3 angepasst ist, und eine kurze Zahnflanke 14 aufweist, hinter die der Sperrbolzen 3 eingreift. Beim betriebsmäßigen Antrieb der Antriebseinheit 1 bewegt sich der Zahnring 6A der Fig. 5a rechts herum.

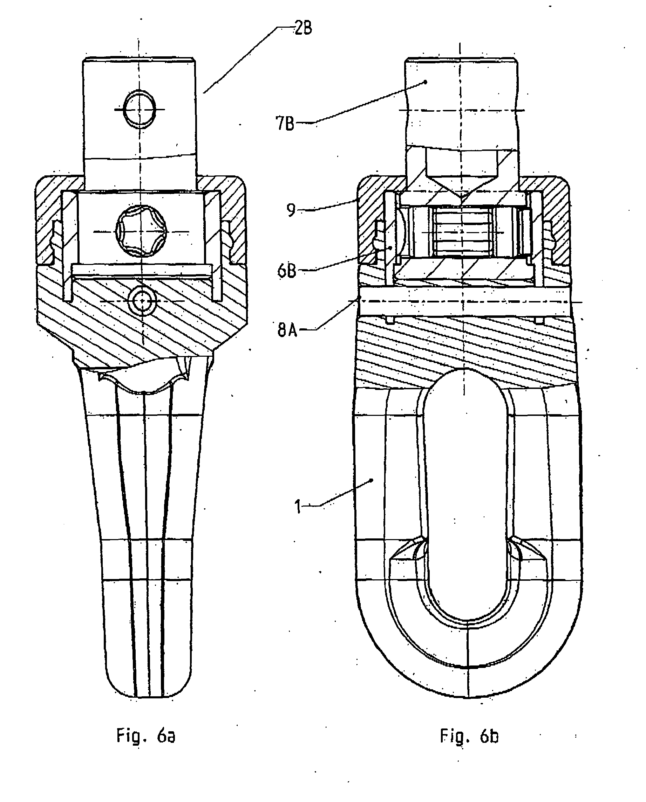

In den Figuren 6a, 6b ist eine unterschiedliche Befestigungsart der Abtriebseinheit 2B in der Antriebseinheit 1 gezeigt. Der unterschiedliche Zahnring 6B weist auf seiner Außenseite keine Rippen wie in Fig. 2a auf. Die Verdrehsicherung wird hier dadurch erreicht, dass der Zahnring 6B nach unten verlängert ist, dass diese Verlängerung und die Antriebseinheit 1 mit einer durchgehenden Querbohrung versehen sind und dass in diese Querbohrung ein Befestigungsmittel 8A, beispielsweise ein Stift, eingeführt ist. Die Abtriebseinheit 2B wird auch mittels einer auf die Antriebseinheit 1 aufrastbaren Abdeckkappe 9 in dieser gehalten. Bei einer derartigen Ausführung kann die Abtriebseinheit 2B leicht ausgetauscht werden.

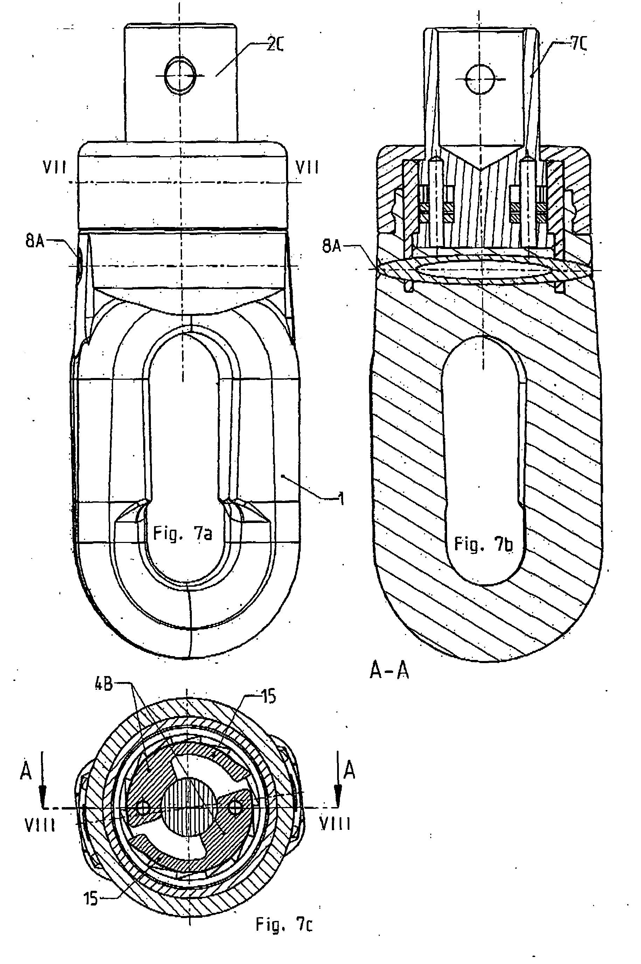

In den Figuren 7a-7c ist eine gegenüber den vorhergehenden Ausführungen unterschiedliche Überlastsicherung gezeigt, wobei eine Abtriebseinheit 2C verwendet ist. Anstelle der Sperrbolzen sind hier zwei platten- und kreissegmentförmige Federelemente 4B mit jeweils einem Federarm 15 mit der Aufnahme 7C mittels Befestigungsmitteln 8B verbunden. Die Federelemente 4B stützen sich an der Aufnahme 7C ab. Die Federarme 15 liegen an der Innenverzahnung des Zahnrings 6B an. Das Befestigungsmittel 8A zur Befestigung der Abtriebseinheit 2C in der Querbohrung der Antriebseinheit 1 ist hier ein Stift.

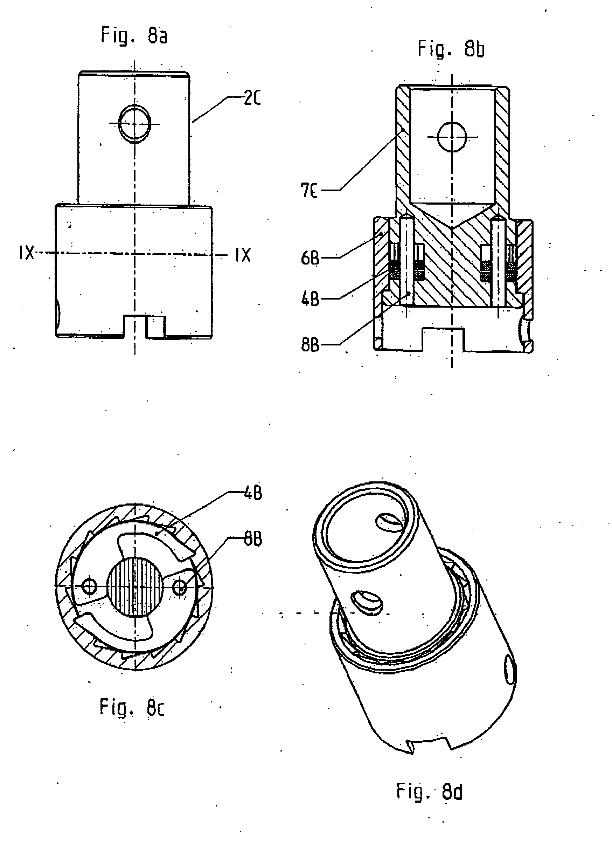

In den Figuren 8a-8d ist die Abtriebseinheit 2C noch einmal für sich gezeigt.

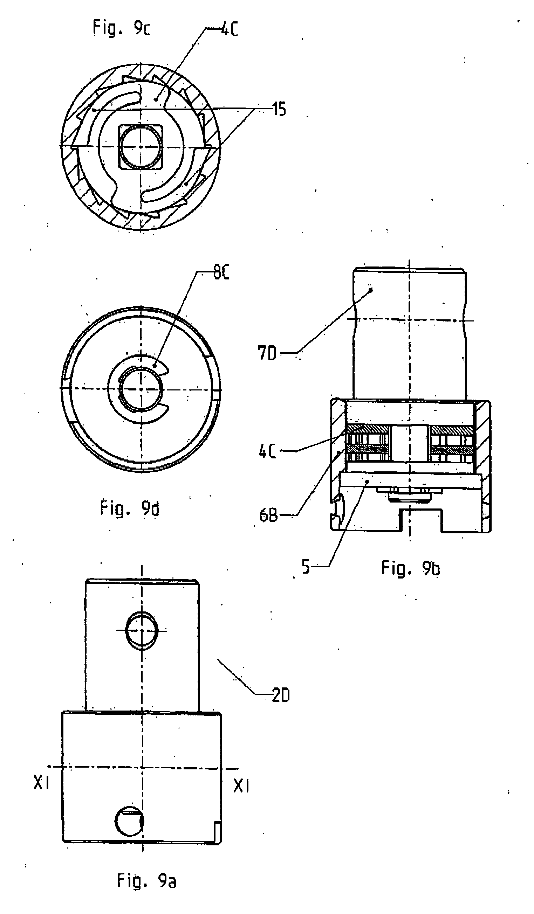

In den Figuren 9a-9d ist eine weitere Ausführung der Überlastsicherung gezeigt, die der in den Figuren 7c und 8c dargestellten ähnelt. Anstelle der beiden getrennten Federelemente 4B ist hier ein einziges Federelement 4C mit zwei gegenüberliegenden Federarmen 15 verwendet, Das Federelement 4C weist eine Formschlüssige Ausnehmung auf und ist auf einen Abschnitt der Aufnahme 7D aufgeschoben. Die Aufnahme 7D wird mittels der Lochscheibe 5 und einer Federscheibe 8C gegen eine axiale Verschiebung gesichert. Die Axialsicherung kann auch durch Verformung oder Verwendung anderer Befestigungsmittel erreicht werden. Beim betriebsmäßigen Antrieb der Antriebseinheit 1 bewegt sich der Zahnring 6B der Fig. 5a links herum.

### Bezugszeichenliste

- 1: Antriebseinheit
- 2A: Abtriebseinheit A
- 2B: Abtriebseinheit B
- 2C: Abtriebseinheit C
- 2D: Abtriebseinheit D
- 3: Sperrbolzen
- 4A: Federelement A
- 4B: Federelement B
- 4C: Federelement C
- 5: Lochscheibe
- 6A: Zahnring A (mit Innenverzahnung)
- 6B: Zahnring B (mit Innenverzahnung)
- 7A: Aufnahme A
- 7B: Aufnahme B
- 7C: Aufnahme C
- 7D.: Aufnahme D
- 8A: Befestigungsmittel A
- 8B: Befestigungsmittel B
- 8C: Befestigungsmittel C
- 9: Abdeckkappe
- 10: Rippe
- 11: Bohrung
- 12: Ringrand
- 13: Lange Zahnflanke
- 14: Kurze Zahnflanke
- 15: Federarm

## Patentansprüche

1. Antriebsvorrichtung aus einer Antriebseinheit und einer Abtriebseinheit für Markisen, Rollläden, Jalousien und dergleichen, wobei die Antriebsvorrichtung im Zuge des Markisenantriebs angeordnet ist, insbesondere Kurbelantriebsvarrichtung,
**dadurch gekennzeichnet,**
**dass** die Abtriebseinheit (2A-2D) eine integrierte Überlastsicherung (3, 4A-4C) aufweist.

2. Antriebsvorrichtung nach Anspruch 1,
**dadurch gekennzeichnet,**
**dass** die Überlastsicherung (3, 4A-4C) in eine oder zwei Richtungen drehmomentabhängig arbeitet.

3. Antriebsvorrichtung nach Anspruch 1 oder 2,
**dadurch gekennzeichnet,**
**dass** eine Sperrposition zwischen Antriebseinheit und Abtriebseinheit in einer der Betriebsrichtung entgegen gesetzten Richtung für die Übertragung von benötigten Bedienkräften vorgesehen ist.

4. Antriebsvorrichtung nach einem der Ansprüche 1 bis 3,
**dadurch gekennzeichnet,**
**dass** die Abtriebseinheit (2A-2C) form- und/oder kraftschlüssig in der Antriebseinheit (1) befestigt ist.

5. Antriebsvorrichtung nach einem der Ansprüche 1 bis 4,
**dadurch gekennzeichnet,**
**dass** die Befestigung der Abtriebseinheit in der Antriebseinheit mit losen Befestigungsmitteln oder durch eine Verformung beliebiger Art erfolgt.

6. Antriebsvorrichtung nach einem der Ansprüche 1 bis 5,
**dadurch gekennzeichnet,**
**dass** eine axiale Sicherung der Abtriebseinheit in der Antriebseinheit durch Verwendung von Befestigungsmitteln, insbesondere einer Umspritzung, gewährleistet ist.

7. Antriebsvorrichtung nach einem der Ansprüche 1 bis 6,
**dadurch gekennzeichnet,**
**dass** die Abtriebseinheit (2A-2D) einen in der Antriebseinheit (1) befestigten Zahnring (6A, 6B) aufweist, der mit einer Innenverzahnung versehen ist, und dass eine Aufnahme (7A-7D) in diesem Zahnring drehbar gelagert ist, die mit mindestens einem an ihr befestigten Eingriffsglied (3, 4A-4C) in die Innenverzahnung eingreift.

8. Antriebsvorrichtung nach Anspruch 7,
**dadurch gekennzeichnet,**
**dass** die Eingriffsglieder durch ein bzw. mehrere vorzugsweise gegenüberliegende, radial wirkende Sperrbolzen (3) gebildet sind, die durch eine zwischen diesen angeordnete Druckfeder (4A) gegen die Innenverzahnung gedrückt werden.

9. Antriebsvorrichtung nach Anspruch 7,
**dadurch gekennzeichnet,**
**dass** die Eingriffsglieder durch ein bzw. mehrere getrennte vorzugsweise gegenüberliegende, Sperrkörper mit Federarmen (4B) gebildet sind, und deren Enden in die Innenverzahnung eingreifen.

10. Antriebsvorrichtung nach Anspruch 7,
**dadurch gekennzeichnet,**
**dass** die Eingriffsglieder durch einen zentral auf einen Abschnitt der Abtriebsachse aufgeschobenen Sperrkörper mit ein bzw. mehreren vorzugsweise gegenüberliegenden, Federarmen (4C) gebildet sind, und deren Enden in die Innenverzahnung eingreifen.
